# EUROPEAN PATENT APPLICATION

(11) **EP 1 501 148 A1**
(43) Date of publication of application: **26.01.2005**
(21) Application number: 03715728.6
(22) Date of filing: 02.04.2003
(51) Int. Cl.: H01M 8/06, H01M 8/10, B01D 53/04

(54) **FLUID CLEANER AND FUEL CELL POWER GENERATOR FACILITY**

(30) Priority: 05.04.2002 JP 2002104033
(71) Applicant: Bridgestone Corporation, Tokyo 104-8340 (JP)
(72) Inventor: MORI, Hisashi, c/o Yokohama Plant, Yokohama-shi, Kanagawa 244-0812 (JP)
(74) Representative: HOFFMANN - EITLE
(86) International application number: PCT/JP2003/004213
(87) International publication number: WO 2003/085768

(57) **Abstract**

A fluid cleaner for a fuel-cell generator removes impurities efficiently from fluid supplied to a fuel cell thereby to maintain a high output of a fuel-cell generator for a long time and to prolong a life of the fuel cell. The fluid cleaner has a three-dimensional skeleton structure and a substance for decomposing or absorbing the impurities held in the three-dimensional structure. Fluid such as fuel or air from which the impurities are removed by the fluid cleaner is supplied to a fuel cell.

## Description

### Cross Reference to Related Application

This is a continuation application of PCT/JP03/04213 filed on April 2, 2003.

### Field of the Invention

The present invention relates to a fluid cleaner for removing impurities from a fluid such as air or fuel supplied to a fuel cell. The present invention also relates to a fuel-cell generator equipped with the fluid cleaner.

### Background of the Invention

A fuel cell generates electricity by an electrochemical reaction of oxygen with hydrogen, etc. If the fluid such as fuel supplied to the fuel cell contains impurities, the fuel cell is apt to deteriorate. For example, when the fuel cell is operated for long periods, the electromotive force and the life thereof decrease. Various methods for removing impurities from fluid fed to a fuel cell such as air or fuel have been proposed.

JP2000-277139A describes a method in which an air is fed through a heated combustion catalyst layer to decompose impurities such as an organic solvent by combustion thereby removing the impurities from the air.

JP2000-327305A discloses a method in which an air to be used for modification of a fuel gas is treated with active carbon to absorb impurities such as SO_{X}, NO_{X} contained in the air by the active carbon thereby removing the impurities from the air.

JP2001-313057A describes a method in which an air or hydrogen gas is brought into contact with a filter consisting of an ion exchange resin to remove gaseous impurities such as acid gas or alkaline gas.

JP2002-93452A discloses a method in which impurities such as sulfur dioxide gas contained in a fuel gas are brought into contact with molten carbonate to remove the impurities.

### Summary of the Invention

It is an object of the present invention to remove impurities effectively from a fluid, such as fuel gas and air, supplied to a fuel cell.

It is another object of the present invention to provide a power generator equipped with a fuel cell and a fluid cleaner.

A fluid cleaner of the present invention for removing impurities from a fluid supplied to a fuel cell has a three-dimensional skeleton structure and a material for decomposing or absorbing the impurities. The material is held in the three-dimensional skeleton structure.

According to the fluid cleaner of the present invention, impurities in a fluid are decomposed or absorbed by the material for decomposition or absorption held in the three-dimensional skeleton structure, so that the impurities are removed from the fluid. Since the material for decomposition or absorption is held in the three-dimensional skeleton structure, the specific surface thereof is so large as to decompose or absorb the impurities effectively. The fuel cell supplied with the purified fluid maintains good properties for long periods so that the life thereof is lengthened.

### Detailed Description of the Preferred Embodiments

The three-dimensional skeleton structure may be composed of polyurethane foam or a three-dimensional skeleton net. The material for decomposition or absorption may be absorbent particles such as active carbon. The absorbent particles may be held in the three-dimensional skeleton structure via a binder layer. The absorbent particles may be fixed to the binder layer in such a manner that a part thereof is in contact with the binder layer and the remainder thereof is exposed out of the binder layer.

The fluid cleaner of the present invention may consist of polyurethane foam as the three-dimensional skeleton structure, a non-solvent type binder layer applied to the surface and inside of the skeleton structure of the polyurethane foam, and absorbent particles having an average particle diameter from 1/50 to 1/1.5 of an average distance between skeletons of the polyurethane foam. The absorbent particles can be fixed to the binder layer in such a manner that a part thereof is in contact with the binder layer and the remainder thereof is exposed out of the binder layer. The non-solvent type binder layer may be applied to the surface layer of the fluid cleaner.

The fuel cell may be of any type, such as a solid polymer type, alkaline solution electrolyte type, phosphoric acid solution electrolyte type, molten carbonate electrolyte type, or solid oxide electrolyte type. The fuel cell may be of either a stationary type or a portable type, such as on-vehicle type.

Fuel supplied to the fuel cell may be any gas fuel, such as a hydrogen gas, coal gas, natural gas, other various hydrocarbon gases, or modified gases thereof. The fuel may be a liquid fuel.

A gas for oxidizing the fuel may be oxygen, air, or oxygen-rich air, but not limitative thereto.

Examples of impurities contained in the above fuel gases and air are SO_{X}, NO_{X}, H₂S, hydrocarbon such as benzene and toluene, and various volatile organic compounds.

The fluid cleaner of the present invention has a three-dimensional skeleton structure (a structural body having a three-dimensional skeleton structure) and a material for composing or absorbing the impurities. The material is held in the three-dimensional skeleton structure.

The three-dimensional skeleton structure may be composed of various synthetic resin foams, such as a polyurethane foam and gas-permeable polyethylene foam. Alternatively, the three-dimensional skeleton structure may be composed of a nonwoven fabric which is made in such a manner that organic fibers (for example, filaments of polyester or nylon) are gathered into a rock wool-like constitution so as to have a thickness of 3 to 30mm or more. As for the polyurethane foam, the gas permeability thereof can be improved and the inter-skeleton distance thereof can be regulated arbitrarily by controlling the foaming of the polyurethane material. The gas permeability of the polyurethane foam can be improved by applying a physical or chemical treatment, such as an explosion treatment and alkali treatment, after the foaming. The polyurethane foam may be a flexible polyurethane foam or a reticulated polyurethane foam from which foamed membranes are removed. The three-dimensional skeleton structure may be rigid one, such as a polyurethane foam on the surface of which a metal coating layer is formed, a sintered metal, or a sintered ceramic.

The gas permeability (cm³/cm²/sec) of the three-dimensional skeleton structure can be specified by measuring the air permeation rate (L/min) thereof by using a FRAGILE type testing apparatus as specified in the Standard JIS L1004-1972 (Testing Method for Cotton Fabric). The three-dimensional skeleton structure is sliced into a test piece having a thickness of 10mm to be tested in this testing method. The three-dimensional skeleton structure is preferable to have a gas permeability of 150 cm³/cm²/sec or higher, more preferably 250 cm³/cm²/sec or higher. The air permeation rate of the three-dimensional skeleton structure is preferable to be in a range of about 50 to 500 L/min.

The material for absorption held in the three-dimensional skeleton structure may be particles of active carbon, zeolite, ion exchange resin, active clay, active alumina, powdered silica gel or the like. The active carbon has general-purpose properties. The active carbon is preferable to have a BET specific surface of 500m²/g or larger, more preferably of about 1000 to 2000m²/g. The larger the specific surface of the particles is, the higher the absorptivity thereof is. However, the larger the specific surface is, the lower the hardness thereof is apt to be. The particles having low hardness might cause dust.

The absorbent particles may be active carbon impregnated with an alkaline substance such as potassium carbonate, sodium carbonate, potassium hydroxide, sodium hydroxide or the like. Alternatively, the active carbon may be impregnated with an acid substance. The active carbon impregnated with such an alkaline or acid substance removes sulfur compounds in atmosphere at high efficiency. Such sulfur compounds cause deterioration of catalysts held in ion exchange membranes and electrodes of a fuel cell thereby reducing the electromotive force of the fuel cell.

The absorbent particles may carry a catalyst to decompose impurities. The catalyst may be held in the three-dimensional skeleton structure directly, without being carried by the absorbent particles.

The fluid cleaner of the present invention may have the three-dimensional skeleton structure and the above absorbent particles held in the three-dimensional skeleton structure via a binder layer. The absorbent particles may be fixed to the binder layer in such a manner that a part thereof is in contact with the binder layer and the remainder thereof is exposed out of the binder layer. The absorbent particles exposed out of the binder layer come into contact with a fluid directly so as to remove impurities in the fluid effectively. The average particle diameter of the absorbent particles is preferable to be 1/50 to 1/1.5 of the average distance between the skeletons of the three-dimensional skeleton structure (i.e. the average diameter of the cells of the three-dimensional skeleton structure). It is preferable that 95% by weight or more of the absorbent particles have a diameter of 1/5 to 5, more preferably 1/2 to 2 times as large as the average diameter of the cells.

When the average particle diameter of the absorbent particles is 1/50 (2%) to 1/1.5 (67%) of the average cell diameter of the three-dimensional skeleton structure, the absorbent particles can be deeply dispersed into the three-dimensional skeleton structure and the resultant absorbent material exhibits higher absorptivity than conventional ones. It is more preferable that the average particle diameter is 1/10 (10%) to 1/2 (50%) of the average cell diameter of the three-dimensional skeleton structure for maintaining the gas permeability and increasing the absolute absorption power.

Absorbent particles having an average particle diameter of 1/1.5 (67%) or larger of the average cell diameter of the three-dimensional skeleton structure is hard to disperse in the three-dimensional skeleton structure deeply when the absorbent particles are fed into the three-dimensional skeleton structure through the surface thereof. A great part of the large absorbent particles thus adhere to near the surface of the three-dimensional skeleton structure. Since the adhesive force of the large absorbent particles is weak, the large absorbent particles are liable to come off from the three-dimensional skeleton structure. This is considered to be caused because the contact area of the absorbent particles and the three-dimensional skeleton structure is relatively small for the size of the particles. Therefore, in case of absorbent particles having a large average particle diameter, a binder should be utilized to increase the adhesion force of the absorbent particles to the three-dimensional skeleton structure.

When the average particle diameter of the absorbent particles is smaller than 1/50 (2%) of the average cell diameter of the three-dimensional skeleton structure, the amount of the particles which adhere to the three-dimensional skeleton structure becomes very small. This is considered to be because the fine absorbent particles lightly cover the binder layer applied to the surface of the three-dimensional skeleton structure and no further particles adhere to the binder layer, thereby reducing the total amount of the absorbent particles which adhere to the three-dimensional skeleton structure. As a result, the absorptivity of the absorbent material as a whole becomes as small as that of a conventional one which is prepared by applying a mixture of absorbent particles and a binder to a three-dimensional skeleton structure.

The binder is arbitrarily chosen and utilized from among various type of one. It is preferable to use a binder which bonds the absorbent particles to the three-dimensional skeleton structure strongly and doesn't cause clogging of the three-dimensional skeleton structure easily. That is, a preferable binder contains a large amount of solids and a small amount of volatile. Specifically, a preferable binder contains 30% or more by weight, more preferably 50% or more by weight, of solids and 50% or less by weight, more preferably 0%, of organic solvent. The non-solvent type binder does not affect the absorptivity of the absorbent material significantly.

A moisture-curing type reactable urethane hot melt and acrylic or urethane emulsion binder may be used as the binder. An urethane prepolymer containing excess NCO and more preferably MDI (methylene diisocyanate)-based urethane prepolymer also may be used as the binder. The MDI-based urethane prepolymer does not produce free isocyanate more easily, is not absorbed by the absorbent particles more easily, and causes less sanitary problem in the production process, than a TDI (tolylene diisocyanate)-based one.

When an urethane prepolymer containing excess NCO to be used as the binder has an excessively high viscosity, a minimum amount of an organic solvent is added to the prepolymer and then the prepolymer is applied to be the three-dimensional skeleton structure. Most of the organic solvent is evaporated by drying the binder with a hot air, and then the absorbent particles are applied to the binder layer.

The binder may be applied to the three-dimensional skeleton structure by dipping the latter in a binder impregnation bath and then removing the excess binder from the three-dimensional skeleton structure by squeezing it with a roll, by applying the binder to the surface of the three-dimensional skeleton structure by spraying or roll-coating and then squeezing it with a roll so that the binder penetrates into the three-dimensional skeleton structure, or by any other suitable means. To attach the absorbent particles to the three-dimensional skeleton structure to which the binder has previously been applied as mentioned above, a fluidized bed coating, powder spraying or sieving may be used.

By the powder spraying or sieving, the three-dimensional skeleton structure can be uniformly coated on both sides thereof with the absorbent particles sprayed or sieved while the three-dimensional skeleton structure is being reversed or turned over.

During and/or after application of the absorbent particles, the three-dimensional skeleton structure may be vibrated to promote the impregnation or penetration of the absorbent particles into the three-dimensional skeleton structure and positive adhesion of the absorbent particles to the skeleton of the three-dimensional skeleton structure.

Furthermore, the three-dimensional skeleton structure coated with the absorbent particles may be passed through a single set, or a plurality of sets of rolls. As lightly pressed between the rolls, the particles can be attached more securely to the three-dimensional skeleton structure. A suitable inter-roll space for this purpose is 90 to 60% of the thickness of the three-dimensional skeleton structure.

The binders may be solidified by suitable methods for them, respectively. When the binder is a urethane prepolymer, it can be cured in a hot stream. This curing is simple and permits to provide a great adhesion of the binder to the three-dimensional skeleton structure. If a part of the absorbent particles is covered with the binder, fine pores are formed in the binder coating due to generation of carbon dioxide gas while the urethane is cured, so that the reduction of the absorptivity of the absorbent particles is not serious.

After the absorbent particles are applied to the binder layer which has been previously applied to the three-dimensional skeleton structure, a further binder coating may be applied over the absorbent particles before the previous binder layer is cured in order to prevent the particles from coming off from the three-dimensional skeleton structure, whereby the absorbent particles can be held in the three-dimensional skeleton structure very securely.

In this case, the absorbent particles adhering to the surface layer of the substrate are covered with the binder entirely, so that the absorptivity of the absorbent particles in this area is reduced, while the adhesion force thereof is improved. However, a large part of the absorbent particles adhering to the inner layer of the three-dimensional skeleton structure are not affected by the binder significantly, so that the reduction of the absorptivity of the absorbent material as a whole is not serious.

Since the thickness of the surface layer to be formed can be arbitrarily controlled due to the amount of the binder to be applied to, it may be specified suitably in consideration for increase of the adhesion force of the absorbent particles in the surface layer and decrease of the absorptivity of the absorbent material as a whole. As the thickness of the three-dimensional skeleton structure becomes larger, the rate of decrease of the absorptivity due to the surface layer coating becomes lower. The binder applied to the surface layer may be the same as the one having been applied to the three-dimensional skeleton structure previously.

The binder previously applied to the three-dimensional skeleton structure may be of flexible type so as not to reduce flexibility of the three-dimensional skeleton structure, and the following binder applied to the surface layer may be of rigid type and thus have a strong adhesion force. In case of an emulsion type binder, it is apt to cause blemishes, such as pinhalls, in its coating layer, so that it can provide gas permeability advantageously to the binder layer.

In case that a fluid is supplied to a fuel cell through the fluid cleaner of the present invention, a filter such as an HEPA filter or ULPA filter may be located in the upstream side of the fluid cleaner.

According to the present invention, impurities in the fluid supplied to the fuel cell can be removed effectively, so that the power of the power generator can be maintained at high rate for long periods and the life of the fuel cell can be lengthened.

## Claims

1. A fluid cleaner for removing impurities from a fluid supplied to a fuel cell, comprising: a three-dimensional skeleton structure; and
a material for decomposing or absorbing the impurities, said material being held in the three-dimensional skeleton structure.

2. A fluid cleaner for a fuel cell as claimed in claim 1, wherein the material is composed of absorbent particles.

3. A fluid cleaner for a fuel cell as claimed in claim 2, wherein the absorbent particles are made of at least one selected from the group consisting of a coconut-shell active carbon, wood active carbon, spherical active carbon of petroleum-pitch type, pellet-molded active carbon, natural zeolite, synthetic zeolite, active clay, surface-active agent, cation or anion exchange resin, cation or anion exchange filter, chelate resin, chelate compound, inorganic cation or anion absorbent, inorganic synthetic chemical deodorizer, absorbent having a multi-cellular structure in which a compound to decompose an objective gas component chemically by chemical reaction such as neutralizing reaction is held, absorbent having a multi-cellular structure in which an oxidizing or reducing catalyst made of precious or base metal is held, absorbent having a multi-cellular structure in which a photocatalyst such as titanium oxide is held, and absorbent having a multi-cellular structure on which a layer made of photocatalyst such as titanium oxide is formed.

4. A fluid cleaner for a fuel cell as claimed in claim 2, wherein the absorbent particles are made of active carbon impregnated with an alkaline or acid substance.

5. A fluid cleaner for a fuel cell as claimed in claim 2, wherein the absorbent particles are adhered to the three-dimensional skeleton structure via a binder layer.

6. A fluid cleaner for a fuel cell as claimed in claim 5, wherein the absorbent particles are fixed to the binder layer in such a manner that a part thereof is in contact with the binder layer and the remainder thereof is exposed out of the binder layer.

7. A fluid cleaner for a fuel cell as claimed in claim 1, wherein the three-dimensional skeleton structure is composed of a synthetic resin foam or nonwoven fabric.

8. A fluid cleaner for a fuel cell as claimed in claim 1, wherein the three-dimensional skeleton structure is composed of a polyurethane foam.

9. A fluid cleaner for a fuel cell as claimed in claim 1, wherein the fluid cleaner consists of polyurethane foam as the three-dimensional skeleton structure, a non-solvent type binder layer applied to the surface and inside of the skeleton structure of the polyurethane foam, and absorbent particles having an average particle diameter from 1/50 to 1/1.5 of the average distance between skeletons of the polyurethane foam, the absorbent particles being fixed to the binder layer in such a manner that a part thereof is in contact with the binder layer and the remainder thereof is exposed out of the binder layer.

10. A fluid cleaner for a fuel cell as claimed in claim 1, wherein the fluid cleaner consists of polyurethane foam as the three-dimensional skeleton structure, a non-solvent type binder layer applied to the surface and inside of the skeleton structure of the polyurethane foam, absorbent particles having an average particle diameter from 1/50 to 1/1.5 of the average distance between skeletons of the polyurethane foam, the absorbent particles being fixed to the binder layer in such a manner that a part thereof is in contact with the binder layer and the remainder thereof is exposed out of the binder layer, and a non-solvent type binder layer applied on the surface of the polyurethane foam.

11. A power generator comprising:
a fuel cell; and
a fluid cleaner for removing impurities from a fluid supplied to a fuel cell,
wherein the fluid cleaner is the one as claimed in claim 1.

12. A power generator as claimed in claim 11, wherein the fluid cleaner removes impurities from a fuel gas or air to be supplied to the fuel cell.
